Europäisches Patentamt

European Patent Office

Office européen des brevets

Veröffentlichungsnummer: **0 266 764**
A2

## EUROPÄISCHE PATENTANMELDUNG

Anmeldenummer: 87116285.5

Int. Cl.⁴: **B23Q 35/128** , B23K 26/04

Anmeldetag: 05.11.87

Priorität: 07.11.86 DE 3638077

Veröffentlichungstag der Anmeldung:
11.05.88 Patentblatt 88/19

Benannte Vertragsstaaten:
DE FR GB IT

Anmelder: **Fried. Krupp Gesellschaft mit beschränkter Haftung**
**Altendorfer Strasse 103**
**D-4300 Essen 1(DE)**

Erfinder: **Müller, Reinhard, Dr.-Ing.**
**Klapperstrasse 97**
**D-4300 Essen 14(DE)**

Verfahren und Anordnung zum Führen eines Laserarbeitsstrahls längs einer Nahtfuge.

Bei diesem Verfahren wird der Lasermeßstrahl (35) - in Schweißvorschubrichtung S gesehen - vor dem Laserarbeitsstrahl (7) in den Bereich der Nahtfuge (31) gerichtet und - reflektiert - von einer optoelektronischen Meßeinrichtung (10) aufgenommen. Dabei kann der Lasermeßstrahl (35) sowohl als Teil aus dem Laserarbeitsstrahl (7) ausgeblendet als auch einer separaten Laserstrahlquelle (37) entnommen werden. Zum besseren Erkennen wird der Lasermeßstrahl (35) vorzugsweise periodisch quer über die Nahtfuge (31) geführt.

FIG.1

EP 0 266 764 A2

## Verfahren und Anordnung zum Führen eines Laserarbeitsstrahls längs einer Nahtfuge

Die Erfindung betrifft ein Verfahren zum Führen eines Laserarbeitsstrahls mit Hilfe eines Lasermeßstrahls längs einer Nahtfuge nach dem Oberbegriff des Anspruchs 1 sowie eine Anordnung nach dem Oberbegriff der Ansprüche 7, 10 bzw. 11 zur Durchführung des Verfahrens.

Bei schweißtechnischen Laseranwendungen werden - in Fällen einer geradlinigen Schweißnaht - z.B. zwei Punkte, vorzugsweise der Anfangs-und der Endpunkt der Nahtfuge mit Hilfe eines genau in Richtung der Achse des Laserhaupt-oder -schweißstrahls eingeblendeten Meßstrahls ermittelt. Die ermittelten Punkte werden in das Steuerprogramm für den Laserhaupt-oder -arbeitsstrahl eingegeben und die Naht wird nach einem gegebenen Programm - z.B. geradlinig zwischen den ermittelten Punkten - geschweißt.

Aus der JP-A-59-218291 ist eine Anordnung mit einem Laserarbeitsstrahl bekannt, bei der ein Teil des Laserarbeitsstrahls als Meßstrahl durch einen teildurchlässigen Spiegel gelangt und in einem Brennpunkt fokussiert wird, der - in Schweißvorschubrichtung gesehen - vor dem Brennpunkt des Laserarbeitsstrahls projiziert wird. Zum Erkennen des punktförmig konzentrierten Lasermeßstrahls ist ein quer zur Nahtfuge ausgerichteter Detektor mit einer Vielzahl von zeilenförmig angeordneten Einzelelementen erforderlich. Dabei ist die für ein einmaliges Auslesen eines solchen Detektors benötigte Zeit durchaus so erheblich, daß der Laserarbeitskopf bei hohen Schweißgeschwindigkeiten nur sprunghaft nachgeführt werden kann. Insbesondere aber ist der Laserstrahl nur verfügbar, wenn der Laserarbeitsstrahl auch austritt, so daß eine Anfangsmessung ohne Arbeitsstrahl nicht möglich ist.

Ferner ist aus der DE-OS 26 24 121 ein Verfahren und eine Vorrichtung zum Laserbearbeiten von Werkstücken bekannt, bei dem bzw. bei der ein Meßstrahl von einer separaten Laserstrahlquelle genau in die Achse des Laserhauptstrahls eingeblendet wird. Anhand der durch den Lasermeßstrahl ermittelten Daten der Lage des Werkstücks wird dann das Steuerprogramm zur Führung des Laserhauptstrahls entsprechend abgeändert.

Beim Schweißen ergibt sich aber das Problem, daß eine vorbereitete Schweißnaht nicht immer ihrem Sollverlauf entspricht. Der durch ein Programm gesteuerte Laserhaupt-oder -schweißstrahl kann deshalb in einem solchen Fall teilweise außermittig zur Nahtfuge geführt werden. was zu gravierenden Fehlschweißungen führt.

Der Erfindung liegt die Aufgabe zugrunde. die genannten Fehlschweißungen auch bei hohen Schweißgeschwindigkeiten vermeiden zu können sowie eine dem Nahtverlauf folgende feinfühlige und verzögerungsarme Nachführung des Arbeitsstrahls zu ermöglichen.

Diese Aufgabe wird - soweit sie das Verfahren betrifft - dadurch gelöst, daß der Lasermeßstrahl periodisch quer über die Nahtfuge geführt wird. Bei dieser Lösung, bei der lediglich ein einziger optoelektronischer Sensor benötigt wird, hängt die Zeitfolge zur Erlangung eines neuen Meßsignals lediglich von der Schwingungsfrequenz eines massearmen Ausblend-bzw Ablenkspiegels ab. Die dabei erreichbaren Zeitfolgen sind deutlich kürzer als die jenigen beim Auslesen einer Sensorzeile, wodurch sich eine wesentlich kontinuierlichere Nachführung des Arbeitsstrahls erreichen läßt.

Zweckmäßige Weiterbildungen der Erfindung sind in den Unteransprüchen beschrieben. So ist es durch das Ausblenden eines Teils aus dem Laserarbeitsstrahl ohne Aufwand möglich, einen Meßstrahl mit hoher Energie und sehr kräftiger Rückstrahlwirkung zu erzeugen, wobei die reflektierten Strahlen auf einfache Weise aufgefangen und verarbeitet werden können. Um die durchschnittliche Schwächung des Arbeitsstrahls gering zu halten, wird der Lasersarbeitsstrahl nach Anspruch 3 intermittierend ausgeblendet.

Mit der Ausbildung des Verfahrens nach Anspruch 4 ist die Möglichkeit gegeben, den Lasermeßstrahl unabhängig von dem Laserarbeitsstrahl zu-und abzuschalten. Soweit die separate Laserstrahlquelle eine andere Wellenlänge erzeugt als die Laserarbeitsstrahl-Quelle, kann durch entsprechende Filterung auch eine Störung der Messung durch den Laserarbeitsstrahl vermieden werden.

Um die Meßstelle nahe an die Schweißstelle heranführen und damit eine verzögerungsarme Nachsteuerung des Laserarbeitsstrahlserreichen zu können, wird nach Anspruch 5 vorgeschlagen, das sich an der Schweißstelle bildende und die Meßstelle verschleiernde Plasma durch Wegblasen zu verringern.

Mit der Ausgestaltung des erfindungsgemäßen Verfahrens nach Anspruch 6 wird in vorteilhafter Weise erreicht. daß ein gegebenenfalls zugegebener drahtförmiger Schweißzusatzwerkstoff in einer solchen auf die Zeit bezogenen Masse zugegeben wird. daß die Nahtfuge gerade aufgefüllt wird.

Die Ansprüche 7 bis 15 zeigen vorteilhafte Ausführungen einer Anordnung zur Durchführung des erfindungsgemäßen Verfahrens. So ist es durch den in den Strahlengang des Laserarbeitsstrahls einbringbaren physikalisch schwarzen Körper möglich, den noch nicht fokussierten Arbeitsstrahl zumindest über einen Teil seines Querschnitts nicht durchzulassen, wobei aus dem unbeeinflußten Teil des Laserarbeitsstrahls der Meßstrahl herausgeblendet werden kann. Dadurch ist es insbesondere möglich, den Anfangspunkt eines Nahtverlaufs ohne den Austritt des Laserarbeitsstrahls ermitteln zu können.

Nach den Ansprüchen 10 bis 13 ist vorgesehen, die Anordnung mit einer vom Laserarbeitsstrahl unabhängigen separaten Laserstrahlquelle für einen Meßstrahl zu versehen, wobei die separate Laserstrahlquelle nach Anspruch 10 eine integrierte Strahlablenkung aufweist, während die separate Laserstrahlquelle bei der Anordnung nach Anspruch 11 einen stetigen Meßstrahl aussendet, der erst durch einen bewegbaren Ablenkspiegel periodisch quer über die Nahtfuge geführt wird.

Um das Nachführen des Laserarbeitsstrahls möglichst feinfühlig und verzögerungsarm durchzuführen, soll der Lasermeßstrahl möglichst kurz vor dem Laserarbeitstrahl auf die Nahtfuge auftreffen. Dazu ist nach Anspruch 14 vorgesehen, den Meß-und den Arbeitsstrahl durch eine gemeinsame Öffnung der Anordnung austreten zu lassen.

Um die Anordnung schließlich den jeweiligen Verhältnissen anpassen zu können, ist der Teil der Anordnung mit der Fokussieroptik nach Anspruch 15 höhenverstellbar ausgebildet.

Ausführungsbeispiele der Erfindung sind in der Zeichnung schematisch dargestellt und werden im folgenden näher erläutert. Es zeigen:

Fig. 1 einen Schweißtisch in perspektivischer Darstellung und eine Laserstrahl-Schweiß-und Meßanordnung in einem zugeordneten Längsschnitt,

Fig. 2 die Anordnung in einem auszugsweisen senkrechten Querschnitt längs der Linie II-II in Fig. 1,

Fig. 3 eine andere Ausführungsform der Anordnung in einem Längsschnitt,

Fig. 4 wiederum eine andere Ausführungsform der Anordnung in einem Längsschnitt und

Fig. 5 wiederum eine andere Ausführungsform der Anordnung mit einer separaten Quelle für den Lasermeßstrahl in einem Längsschnitt.

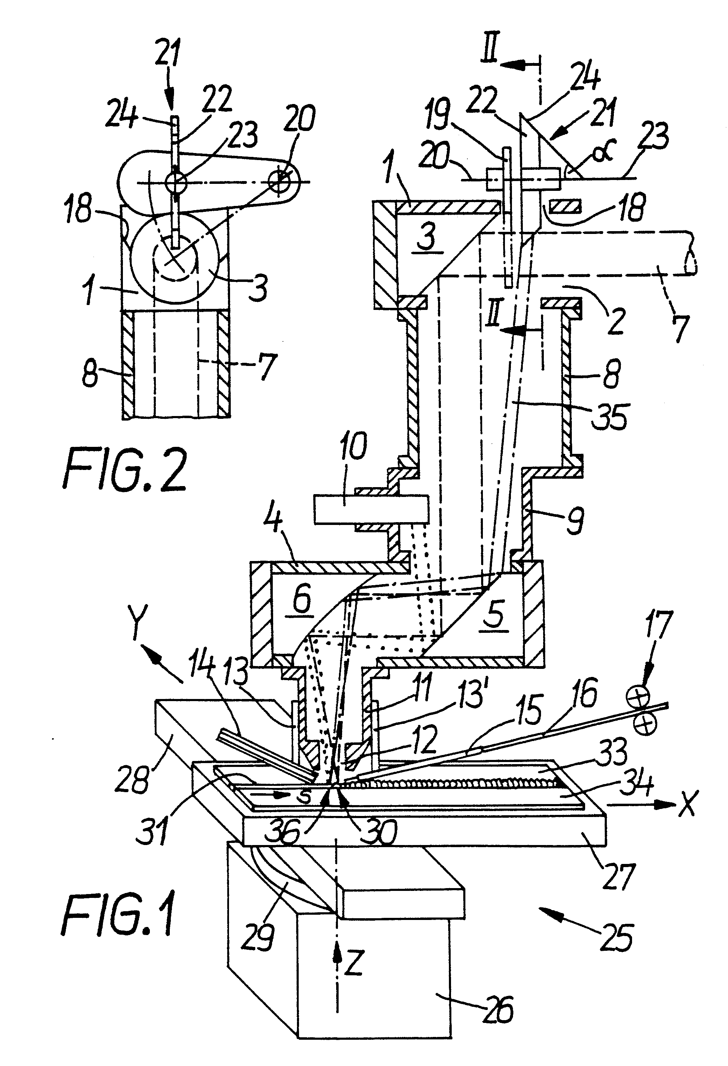

Die Anordnung gemäß den Fig. 1 und 2 weist ein oberes Gehäuseteil 1 mit einer Eingangsöffnung 2 und einem ersten, oberen Umlenkspiegel 3 und ein unteres Gehäuseteil 4 mit einem zweiten, unteren Umlenkspiegel 5 und einem konkaven fokussierenden Endspiegel 6 auf. Dabei ist die Öffnung 2 axial zu dem Ausgang einer (nicht dargestellten) Quelle eines Laserhauptstrahls 7 angeordnet.

Zwischen dem oberen Gehäuseteil 1 und dem unteren Gehäuseteil 4 ist ein erstes und zweites Gehäusezwischenteil 8 bzw. 9 angeordnet, wobei das zweite Zwischenteil 9 einen optoelektronischen Meßkopf 10 aufnimmt. Unter dem Gehäuseteil 4 befindet sich ein rohrförmiger Ansatz 11 mit einem Strahlenausgang 12 und zwei Halterungen 13, 13'. Die eine Halterung 13 trägt ein Rohr 14 zum Zuführen von Schutz-bzw. Arbeitsgas und die zweite Halterung 13' ein Rohr 15 zum Zuführen von drahtförmigem Schweißzusatzwerkstoff 16, wobei die Zugabe des Zusatzwerkstoffs 16 durch eine - schematisch angedeutete Zuführeinrichtung 17 erfolgt.

Das obere Gehäuseteil 1 weist ferner eine obere Öffnung 18 auf, in die ein als physikalisch - schwarzer Körper ausgebildeter Arm 19 um eine waagerechte Achse 20 einschwenkbar ist. In Richtung auf die Eingangsöffnung 2 gesehen vor dem Schwenkarm 19 ist ein Rotor 21 mit zwei Speichen oder Armen 22 drehbar um eine Achse 23 gelagert. Die Speichen 22 weisen an ihren Enden jeweils einen Planspiegel 24 auf, der jeweils gegen die Drehachse 23 um einen Winkel α von etwas weniger als 45° geneigt ist.

Die gesamte Anordnung befindet sich über einem Schweißtisch 25, der aus dem Ständer 26 und - in waagerechter Ebene senkrecht zueinander (z.B. in X-und Y-Richtung) - verfahrbaren Maschinentischen 27 und 28 besteht. Zusätzlich sind die Tische 27, 28 durch eine Hub-und Drehanordnung 29 in der Höhe einstellbar und um eine senkrechte Achse Z schwenkbar.

Zum Schweißen wird der (gestrichelt dargestellte) Laserhaupt-oder Arbeitsstrahl 7 von einer (nicht dargestellten) Laserquelle durch die Öffnung 2 auf den ersten Umlenkspiegel 3 gerichtet, von dieser auf den zweiten Umlenkspiegel 5 und von diesem auf den End-oder Fokussierspiegel 6 reflektiert. An dem Endspiegel 6 wird der Laserarbeitsstrahl 7 gleichzeitig auf die Schweißstelle 30 reflektiert und dort zu einem Brennpunkt fokussiert. Die Schweißstelle 30 ist dabei durch die Nahtfuge 31 zweier auf dem oberen Maschinentisch 27 angeordneter Bleche 33, 34 gegeben.

Wenn der Rotor 21 die in Fig. 2 dargestellte Lage einnimmt und der Planspiegel 24 einer Speiche 22 in den Laserarbeits-oder Hauptstrahl 7 hineinragt, wird ein (strichpunktiert dargestellter) Teil 35 des Laserhauptstrahls 7 leicht schräg nach unten auf den zweiten Umlenkspiegel 5 reflektiert. Die durch den Winkel α des Spiegels 24 gegebene Schräglage bewirkt, daß der Teil 35 des Laserhauptstrahl 7 - in Schweißvorschubrichtung S gesehen - an einer Meßstelle 36 vor der Schweißstelle 30 auf die Nahtfuge 31 auftrifft. Der von den Blechen 33, 34 (punktiert dargestellte) reflektierte und durch den Ansatz 11 zurückgehende Teil des Meßstrahls 35 gelangt über die Spiegel 5 und 6 zu dem optoelektronischen Meßkopf 10. Das von diesem Meßkopf aufgenommene Strahlensignal wird dabei zur Steuerung der Maschinentische 27, 28 herangezogen. Zur laufenden Überwachung der Lage der Nahtfuge 31 relativ zum Brennpunkt 30 des Laserarbeitsstrahls 7 wird der Rotor 21 in kontinuierliche Drehung versetzt, so daß der Brennpunkt 36 des Meßstrahls 35 periodisch über die Nahtfuge 31 fährt. Im Erfassungsbereich wird der Lasermeßstrahl 35 von der Oberfläche der Bleche 33, 34 reflektiert, während er von der Nahtfuge 31 abgelenkt oder durchgelassen, in keinem Fall aber reflektiert wird. Aus den Verhältnissen der empfangenen oder nicht empfangenen Strahlensignale ergibt sich die Lage der Nahtfuge 31 in bezug auf den rohrförmigen Ansatz 11 bzw. den Brennpunkt 30 des Laserhauptstrahls 7 und die Breite der Nahtfuge.

Um den Anfangspunkt einer Nahtfuge 31 zu bestimmen wird der Arm 19 in den Strahlengang des Laserarbeitsstrahls 7 im oberen Gehäuseteil 1 eingeschwenkt (vgl. strichpunktierte Linie in Fig. 1). Zum Schweißen wird der Arm 19 wieder in die in Fig. 2 dargestellte Lage zurückgeschwenkt und der Schweißvorschub durch den Schweißtisch 27 bewirkt. Während des Schweißens bleibt der Rotor 21 in Drehung, so daß die Lage der Nahtfuge 31 in bezug auf den Ansatz 11 bzw. die Schweißstelle 30 ständig überwacht und eine unzulässige Abweichung zur Korrektur der Vorschubbewegung der Maschinentische 27, 28 in bezug auf die im vorliegenen Fall feststehende Schweißstelle 30 herangezogen wird.

Eine Nahtfuge kann z.B. durch Verzug aneinanderstoßender Werkstückkanten im Verlauf ihrer Länge unterschiedliche Breiten aufweisen. Wird beim Schweißen ein drahtförmiger Zusatzwerkstoff verwendet, so wird dessen pro Zeiteinheit zugeführte Masse zweckmäßigerweise in Abhängigkeit von der Schweißgeschwindigkeit, der Form der Nahtfuge 31 und der vom Lasermeßstrahl 35 jeweils ermittelten Breite der Nahtfuge durch Ändern der Vorschubgeschwindigkeit der Zuführeinrichtung 17 gesteuert, um einem exakten Füllgrad der Nahtfuge zu erreichen.

Um die Meßgenauigkeit durch durch den Laserhauptstrahl 7 entstehendes Plasma nicht unnötig zu beeinträchtigen. wird durch das Rohr 15 ein die Plasmabildung hinderndes Arbeitsgas, z.B.Argon oder Helium über die Meßstelle 36 in Richtung auf die Schweißstelle 30 geblasen.

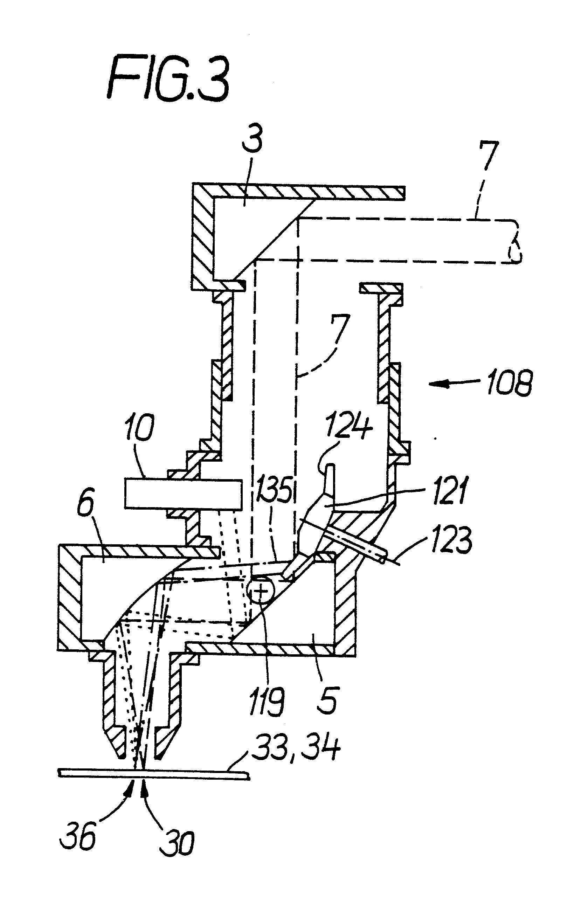

Bei dem Ausführungsbeispiel gemäß Fig. 3 ist das erste Gehäusezwischenteil 108 teleskopartig ausgebildet. so daß der gesamte untere Teil der Laseranordnung mit dem zweiten Umlenkspiegel 5 und dem Fokussierspiegel 6 gegenüber dem waagerecht geführten oberen Teil des Laserstrahls 7 in der Höhe verstellbar ist. Außerdem kann der untere Teil der Anordung so gedreht werden. daß die Meßstelle 36 - in Vorschubrichtung S gesehen - immer vor der Schweißstelle 30 des Laserarbeitsstrahls 7 ist, was insbesondere bei nicht geradlinigen Nahtfugen von Bedeutung ist. Weiter ist der Rotor 121 erst vor dem zweiten Umlenkspiegel 5 angeordnet. Dabei ist die Drehachse 123 des Rotors 121 so angeordnet, daß die auf den Speichen 122 angeordneten Planspiegel 124 in den vom ersten Umlenkspiegel 3 reflektierten Laserarbeitsstrahl 7 hineintragen und einen entsprechenden Teil 135 davon - von dem konkaven Endspiegel 6 wiederum reflektiert - auf die vor der Schweißstelle 30 liegende Meßstelle 36 leiten. Um den Laserarbeitsstrahl 7 zum anfänglichen Bestimmen der Lage der Nahtfuge 31 von dieser fernzuhalten, ist ein zylindrisch ausgebildeter physikalisch schwarzer Körper 119 so in den Bereich vor den zweiten Umlenkspiegel 5 einschiebbar, daß ein Teil des vom oberen Umlenkspiegel 3 kommenden Laserarbeitsstrahls 7 nicht auf den unteren Umlenkspiegel 5 gelangt und auch der übrige Teil des Laserarbeitsstrahls 7 von dem Umlenkspiegel 5 nicht auf den Fokussierspiegel 6 weitergeleitet wird. Dabei ist der zylindrische Körper 119 in Richtung seiner eigenen Achse verschiebbar.

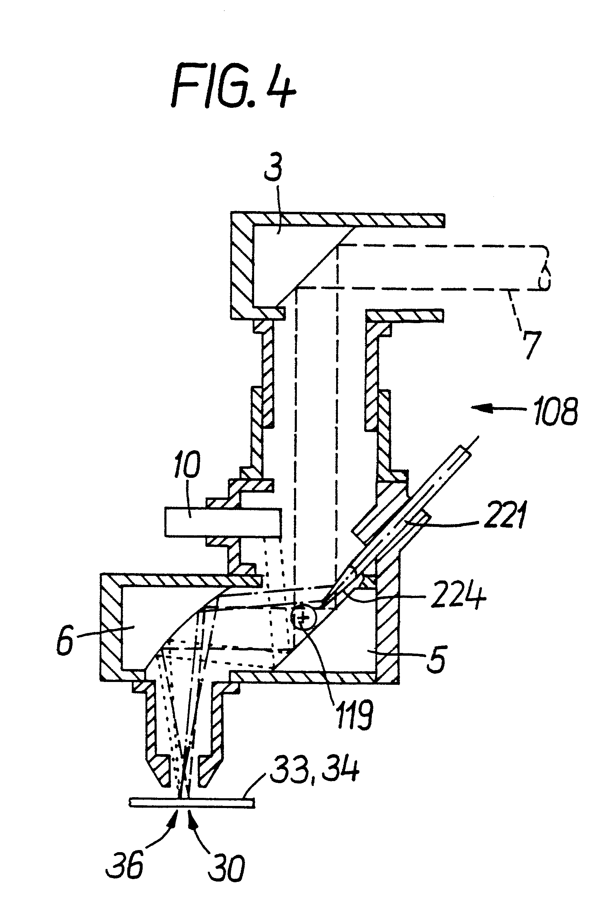

In Abwandlung des beschriebenen Ausführungsbeispiels ist der Rotor 221 gemäß der Anordnung nach Fig 4. pyramidenstumpfförmig abgebildet, wodurch der Meßstrahl 235 periodisch immer in der gleichen Richtung über die Nahtfuge 31 hinweggeht. Der Rotor 221 kann aber auch ständig wechselnd nach links und nach rechts geschwenkt werden. In diesem Fall läuft der Meßstrahl entsprechend wechselseitig über die Nahtfuge 31. Statt des pyramidenstumpfförmigen Endes kann der Rotor 221 - bei anderer Lage seiner Drehachse - auch ein prismatisches Ende aufweisen.

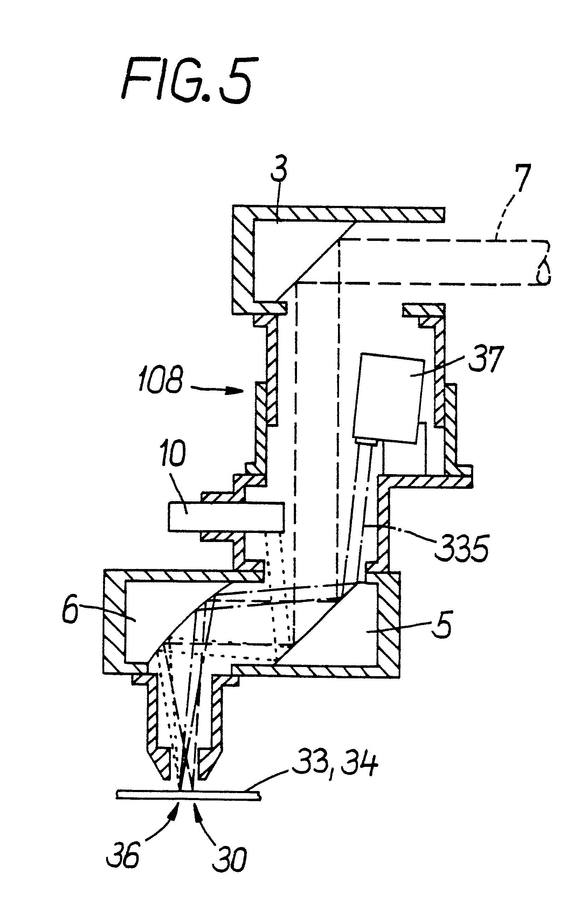

Bei dem Ausführungsbeispiel gemäß Fig. 5 ist für den Meßstrahl 335 eine separate Laserstrahlquelle kleiner Leistung 37 mit integrierter Strahlablenkung vorgesehen. Diese Anordnung weist kein Mittel zum Unterbrechen des Laserhaupt-oder Schweißstrahls 7 auf, da die (nicht dargestellte) Schweiß-Laserstrahlquelle unabhängig von der Quelle 37 für den Meßstrahl 335 abschaltbar ist. Die Ablenkung des aus der separaten Laserquelle 37 stammenden Meßstrahls 335 kann aber auch durch eine separate Spiegelanordnung. wie sie z.B. im Zusammenhang mit dem Ausführungsbeispiel gem. Fig. 4 beschrieben ist (Bezugzeichen 224). erfolgen.

Ansprüche

1. Verfahren zum Führen eines Laserarbeitsstrahls (7) längs einer Nahtfuge (31) zum Schweißen, wobei ein Lasermeßstrahl (35, 335) während der Dauer des Schweißens - in Schweißvorschubrichtung S gesehen - vor dem Laserarbeitsstrahl (7) in den Bereich der Nahtfuge (31) gerichtet und der Laserarbeitsstrahl (7) entsprechend den aus dem Bereich der Nahtfuge (31) reflektierten und von einer optoelektronischen Meßeinrichtung (10) aufgenommenen Strahlenteilen des Lasermeßstrahls (35) geführt wird, **dadurch gekennzeichnet,** daß der Lasermeßstrahl (35, 335) periodisch quer über die Nahtfuge (31) geführt wird.

2. Verfahren nach Anspruch 1, dadurch gekennzeichnet, daß der Lasermeßstrahl (35) als Teil aus dem Laserarbeitsstrahl (7) ausgeblendet wird.

3. Verfahren nach Anspruch 2, dadurch gekennzeichnet, daß der Lasermeßstrahl (35) intermittierend ausgeblendet wird.

4. Verfahren nach Anspruch 1, dadurch gekennzeichnet, daß der Lasermeßstrahl (335) einer separaten Laserstrahlquelle (37) entnommen wird.

5. Verfahren nach einem der Ansprüche 1 bis 4, dadurch gekennzeichnet, daß ein einer Plasmabildung entgegenwirkendes Arbeitsgas über die durch den Meßstrahl (35) gegebene Meßstelle (36) zur Schweißstelle (30) geblasen wird.

6. Verfahren nach einem der Ansprüche 1 bis 5, wobei ein drahtförmiger Schweißzusatzwerkstoff (16) erschmolzen wird, dadurch gekennzeichnet, daß die Breite der Nahtfuge (31) durch den Lasermeßstrahl (35) ermittelt und die auf die Zeit bezogene Masse des Zusatzwerkstoffs (16) proportional der Breite der Nahtfuge (31) gesteuert wird.

7. Anordnung zur Durchführung des Verfahrens nach den Ansprüchen 1 bis 3 mit mindestens einem Umlenkspiegel (3, 5) und mindestens einer Fokussieroptik (6) für einen Laserarbeitsstrahl (7), wobei der bzw. ein Ausblendspiegel (24, 124, 224) in den Strahlengang des Laserarbeitsstrahls (7) einbringbar und derart geneigt ist, daß der aus dem Laserarbeitsstrahl (7) ausgeblendete und durch die Strahlenoptik (3, 5, 6) geleitete Teil als Meßstrahl (35) an einer anderen Stelle (36) aus der Anordnung austritt als der Laserarbeitsstrahl (7), dadurch gekennzeichnet, daß der Ausblendspiegel (24, 124, 224) aus mindestens einem auf einem drehbar gelagerten Körper (21, 121, 221) angeordneten Planspiegel besteht, und daß ein in den Strahlengang des Laserarbeitsstrahls (7) einbringbarer physikalisch schwarzer Körper (19, 119) vorgesehen ist.

8. Anordnung nach Anspruch 7, dadurch gekennzeichnet, daß der drehbar gelagerte Körper (21, 121, 221) eine Vielzahl von Planspiegeln (24, 124, 224) aufweist, die die Seitenflächen seines pyramidenstumpfförmigen oder prismatischen Endes bilden.

9. Anordnung nach Anspruch 7 oder 8, dadurch gekennzeichnet, daß der Ausblendspiegel (24, 124, 224) zwischen zwei Umlenkspiegeln (3, 5) angeordnet ist.

10. Anordung zur Durchführung des Verfahrens nach Anspruch 1 und 4 mit mindestens einem Umlenkspiegel (3, 5), mindestens einer Fokussieroptik (6) für einen Laserarbeitsstrahl (7) und einer separaten Laserstrahlquelle (37) für den Meßstrahl (335), dadurch gekennzeichnet, daß die separate Laserstrahlquelle (37) für den Meßstrahl (335) so ausgerichtet ist, daß der Brennpunkt des Meßstrahls - in Schweißvorschubsrichtung gesehen - im Mittel an einer anderen Stelle (36) gebildet wird als der Brennpunkt (30) des Laserarbeitsstrahls (7) und daß die separate Laserstrahlquelle (37) eine integrierte Strahlablenkung aufweist.

11. Anordnung zur Durchführung des Verfahrens nach Anspruch 1 und 4 mit mindestens einem Umlenkspiegel (3, 5), mindestens einer Fokussieroptik (6) für einen Laserarbeitsstrahl (7) und einer separaten Laserstrahlquelle (37) für einen Meßstrahl (335), dadurch gekennzeichnet, daß mindestens ein periodisch bewegbarer Ablenkspiegel in den Strahlengang der separaten Laserstrahlquelle (37) hineinragt und derart geneigt ist, daß der Brennpunkt des Meßstrahls (335) - in Schweißrichtung gesehen - im Mittel an einer anderen Stelle (36) gebildet wird als der Brennpunkt (30) des Laserarbeitsstrahls (7).

12. Anordnung nach Anspruch 11, dadurch gekennzeichnet, daß der Ablenkspiegel als Planspiegel auf einem drehbar gelagerten Körper angeordnet ist.

13. Anordnung nach Anspruch 12, dadurch gekennzeichnet, daß der drehbar gelagerte Körper eine Vielzahl von Planspiegeln aufweist, die die Seitenflächen seines pyramidenstumpfförmigen oder prismatischen Endes bilden.

14. Anordnung nach einem der Ansprüche 7 bis 13, dadurch gekennzeichnet, daß der Lasermeßstrahl (35) und der Laserarbeitsstrahl (7) durch eine gemeinsame Öffnung (12) austreten.

15. Anordnung nach einem der Ansprüche 7 bis 14, dadurch gekennzeichnet, daß der Teil der Anordnung mit der Fokussieroptik (6) höhenverstellbar ist.

0 266 764

**FIG.2**

**FIG.1**

FIG.3

# FIG.4

FIG.5